Europäisches Patentamt

European Patent Office

Office européen des brevets

(19)

(11) Numéro de publication: **0 291 420**
**A1**

(12) ## DEMANDE DE BREVET EUROPEEN

(21) Numéro de dépôt: **88420116.1**

(22) Date de dépôt: **11.04.88**

(51) Int. Cl.⁴: **G 01 N 23/203**

(30) Priorité: **13.04.87 FR 8705562**

(43) Date de publication de la demande:
**17.11.88 Bulletin 88/46**

(84) Etats contractants désignés:
**AT BE CH DE ES GB GR IT LI LU NL SE**

(71) Demandeur: **PECHINEY**
**23, rue Balzac**
**F-75008 Paris (FR)**

(72) Inventeur: **Dubus, Alain**
**Chemin de Beauregard**
**F-38500 Coublevie (FR)**

(74) Mandataire: **Séraphin, Léon et al**
**PECHINEY 28, rue de Bonnel**
**F-69433 Lyon Cedex 3 (FR)**

(54) **Méthode de dosage à l'aide du numéro atomique moyen de phases contenant un élément léger à l'aide d'un microscope balayage et d'un analyseur d'images.**

(57) Méthode de dosage par détermination quantitative du numéro atomique moyen (ZI) avec une précision de +- 0,1 unité d'une phase inconnue présente sur la coupe micrographique plane d'un échantillon, comportant soit 2 éléments légers ($3 \leq Z \leq 11$), soit au moins un élément lourd ($Z > 2$) et un seul élément léger ($3 \leq Z \leq 11$) à l'aide d'un microscope électronique à balayage comportant un analyseur X, couplé à un analyseur d'images, ce dernier permettant de mesurer l'intensité locale des électrons rétrodiffusés par le niveau de Gris (G) de l'image correspondante, méthode comportant, dans des conditions opératoires données :

a) la détermination de la courbe d'étalonnage $G = f(\overline{Z})$ à l'aide d'étalons connus,

b) la détermination du niveau de Gris (G1) de la phase inconnue considérée,

c) la détermination de ($\overline{Z}$I) par la relation donnée en a),

d) la détermination de la composition chimique à l'aide de la relation $\overline{Z}_1 = g(n_i, Z_i)$, $n_i$ étant l'abondance atomique de l'élément de numéro atomique Zi présent dans la phase considérée. Les valeurs de G ou de G1 sont déterminées par la moyenne arithmétique des niveaux de Gris mesurés par l'analyseur d'images sur toute la surface de la (ou des) phase(s) inconnue(s) et/ou du (ou des) étalon(s) présent(s) dans le champ visualisé.

Cette méthode est applicable à l'identification d'un très grand nombre de phases telles que carbures, nitrures, borures, oxydes.

FIG.1
$G = 66,9Z - 734,6$

numéro atomique

EP 0 291 420 A1

**Description**

## METHODE DE DOSAGE A L'AIDE DU NUMERO ATOMIQUE MOYEN DE PHASES CONTENANT UN ELEMENT LEGER A L'AIDE D'UN MICROSCOPE A BALAYAGE ET D'UN ANALYSEUR D'IMAGES

L'invention concerne une méthode de dosage précise à l'aide de la détermination quantitative du numéro atomique moyen de phases contenant deux éléments légers ou un élément léger associé à des éléments lourds à l'aide d'un microscope à balayage associé à un analyseur d'images de l'intensité des électrons rétrodiffusés.

On sait que l'intensité des électrons rétrodiffusés est une fonction croissante du numéro atomique moyen ($\overline{Z}$) de la cible. Ce phénomène est mis à profit pour obtenir une image dite "électronique" de l'échantillon où le contraste est dû à la variation de $\overline{Z}$ des phases rencontrées.

La mesure quantitative du numéro atomique moyen et par suite de la composition de phases présentes à la surface d'échantillons présentant au moins une partie plane, à l'aide de l'intensité des électrons rétrodiffusés (BSI en langage anglosaxon) en microscopie à balayage est connue par de nombreuses publications. Nous citerons par exemple : M.D. BALL and D.G. Mc CARTNEY, Journal of Microscopy Vol. 124, p. 11, oct. 1981, p. 57-68 (1) ou N.J. OWEN et al, The Institute of Metals Al-Li alloys III- Oxford- 8-11 juillet 1985, p. 576583 (2). Cependant, la détermination de ce numéro atomique se heurte à deux difficultés :

- malgré toutes les précautions prises, la précision de la mesure reste limitée, en particulier pour les faibles numéros atomiques moyens ($\overline{Z} < 11$), où elle est de l'ordre de $+ - 0,5$ unité ((2)- p. 578); ceci ne permet pas de différencier des phases de compositions voisines;

- la résolution spatiale, c'est-à-dire le volume de l'échantillon d'où proviennent les électrons rétrodiffusés, est généralement limitée à quelques µm, soit en profondeur (2,5 µm dans l'Al d'après (1),p. 60), soit en diamètre (1 µm dans l'Al d'après (1), p. 62).

Il en résulte la difficulté de déterminer le numéro atomique de phases de faibles dimensions (par exemple $< 1$ µm en coupe) par suite de la contribution au signal analysé de celui dû à la matrice adjacente aux phases analysées.

La méthode selon l'invention pallie ces deux inconvénients.

Selon l'invention, la méthode de détermination quantitative du numéro atomique moyen ($\overline{Z}_1$) avec une précision de $+ - 0,1$ unité d'une phase inconnue présente sur la coupe micrographique plane d'un échantillon, comportant soit 2 éléments légers ($3 \leqq Z \leqq 11$), soit au moins un élément lourd ($Z > 12$) et un seul élément léger ($3 \leqq Z \leqq 11$) à l'aide d'un microscope électronique à balayage comportant un analyseur X, couplé à un analyseur d'image, ce dernier permettant de mesurer l'intensité locale des électrons rétrodiffusés par le niveau de Gris (G) de l'image correspondante, méthode comportant, dans des conditions opératoires données :

    a) la détermination de la courbe d'étalonnage $G = f(\overline{Z})$ à l'aide d'étalons connus,

    b) la détermination du niveau de Gris ($G_1$) de la phase inconnue considérée,

    c) la détermination de ($\overline{Z}_1$) par la relation donnée en a),

    d) la détermination de la composition chimique à l'aide de la relation $\overline{Z}_1 = g(n_i, Z_i)$, $n_i$ étant l'abondance atomique de l'élément de numéro atomique $Z_i$ présent dans la phase considérée,

caractérisé en ce que les valeurs de G ou de $G_1$ sont déterminées par la moyenne arithmétique des niveaux de Gris mesurés par l'analyseur d'images sur toute la surface de la (ou des) phase(s) inconnue(s) et/ou sur le (ou les) étalon(s) présent(s) dans le champ visualisé.

La résolution spatiale est améliorée et atteint 0,5 µm³ et même 0,1 µm³ sur les matrices lourdes lorsque la tension d'accélération du Microscope à balayage est limitée à 10 kV, de préférence 5 kV.

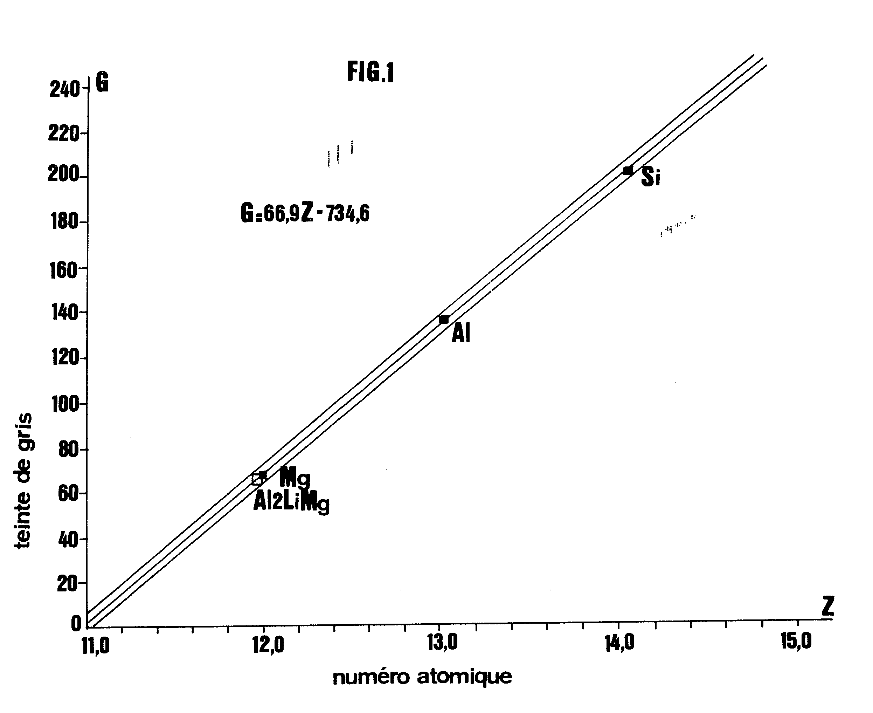

L'invention sera mieux comprise à l'aide de l'exemple suivant et de la figure 1 représentant la courbe d'étalonnage $G = f(\overline{Z})$.

Exemple 1 - Détermination de la nature d'une phase Al-Li-Mg

L'appareillage utilisé est constitué par un microscope à balayage ZEISS, type DSM 950, associé à un analyseur d'images KRONTON, type SEM-IES, avec une interface appropriée.

Les mesures ont été exécutées dans les conditions suivantes sur 3 étalons purs (Mg, Al, Si) et sur la phase inconnue contenant Al-Mg-Li, présente dans un échantillon d'alliage où la phase inconnue représente environ 25 % en volume de l'échantillon considéré et est répartie sous forme de phases isolées dont la taille va de 10 à 30 µm.

Microscope à balayage:    Tension d'accélération    25 kV
    Courant faisceau    400 pA
    Distance de travail    9 mm
    Diaphragme    400 µm
    Grandissement    x 300

Analyseur d'images

Réglage de l'amplification et du seuil de manière à ce que le niveau de Gris G = 0 (noir) corresponde à Z = 11 et le niveau de Gris G = 255 (blanc) corresponde à Z = 15.

Acquisition de l'image de 256 x 256 points couvrant une surface effective de 300 $\mu m^2$ sur l'échantillon.

De préférence, présence de plusieurs phases de même nature sur la même image.

Dans ces conditions, le temps d'acquisition d'une image est de 20 sec environ. Les résultats obtenus sont les suivants :

| Elément | Z | Nbre de mesures | Niveau de Gris G | Intervalle de confiance au risque de 5 % |
|---------|---|-----------------|------------------|------------------------------------------|
| Mg | 12 | 7 | 68,4 | +- 5,3 |
| Al | 13 | 5 | 136,6 | +- 2,5 |
| Si | 14 | 7 | 202,3 | +- 2,0 |

On en déduit que la courbe d'étalonnage est une droite d'équation :

G = 66,9 Z - 734,6    (voir fig. 1)

avec un coefficient de corrélation r = 0,99994.

La mesure de G sur la phase (Al-Li-Mg) est de :

69,5 +- 4,3 au risque de 5 % (6 mesures).

On a également déterminé à l'aide de l'analyseur X du microscope à balayage, par une méthode connue, que le rapport atomique Al/Mg est de 2/1.

La phase inconnue a donc pour formule $Al_2Mg\ Li_x$.

Le numéro atomique moyen $\bar{Z}$ est relié au numéro atomique des éléments présents ($Z_i$) et de leur abondance atomique ($n_i$) par la formule expérimentale

$\bar{Z} = (\Sigma\ n_i\ Z_i^2)\ /\ (\Sigma\ n_iZ_i)$

d'après L.DANDY et R. QUIVY, J. Phys. Radium. 6, 320 (1956).

On en déduit que :

$\bar{Z} = (69,5+734,6)/(66,9) = 12,02 = (2x13^2+12^2+3^2x)/(2x13+12+3x)$

soit x = 0,933 $\simeq$ 1.

La phase inconnue est donc le composé défini $Al_2Li\ Mg$.

Exemple 2 - Stoechiométrie de SiC en dépôt mince (e $\simeq$ 1 $\mu$m)

Les conditions de travail, d'étalonnage et de calcul sont les mêmes que celles de l'Exemple 1.

La présence d'un seul élément lourd fournit une relation directe entre le numéro atomique mesuré et l'indice x dans la formule $SiC_x$.

La mesure de G dans la phase $SiC_x$ est de 47,0 +- 4,4 au risque de 5 % (6 mesures).

On en déduit un numéro atomique moyen de 11,7, ce qui conduit à x = 0,94 +- 0,06. Le composé n'est donc pas significativement différent de Is phase stoéchiométrique.

Cette méthode offre, outre sa grande précision et sa grande résolution spatiale, les avantages suivants :
- rapidité d'acquisition et de traitement des images,
- nettoyage des images par des filtres adaptés,
- possibilité d'élimination de défauts éventuels (rayures, poussières, etc...).

Cette méthode est applicable à l'identification d'un très grand nombre de phases telles que carbures, nitrures, borures, oxydes, etc...

**Revendications**

1. Méthode de dosage par détermination quantitative du numéro atomique moyen ($\bar{Z}1$) avec une précision de +- 0,1 unité d'une phase inconnue présente sur la coupe micrographique plane d'un échantillon, comportant soit 2 éléments légers (3 $\leq$ Z $\leq$ 11), soit au moins un élément lourd (Z > 12) et un seul élément léger (3 $\leq$ Z $\leq$ 11) à l'aide d'un microscope électronique à balayage comportant un analyseur X, couplé à un analyseur d'images, ce dernier permettant de mesurer l'intensité locale des électrons rétrodiffusés par le niveau de Gris (G) de l'image correspondante, méthode comportant, dans des conditions opératoires données :

a) la détermination de la courbe d'étalonnage $G = f(\overline{Z})$ à l'aide d'étalons connus

b) la détermination du niveau de Gris (G1) de la phase inconnue considérée

c) la détermination de $(\overline{Z}1)$ par la relation donnée en a)

d) la détermination de la composition chimique à l'aide de la relation $\overline{Z}_1 = g(n_i, Zi)$, $n_i$ étant l'abondance atomique de l'élément de numéro atomique Zi présent dans la phase considérée

caractérisée en ce que les valeurs de G ou de G1 sont déterminées par la moyenne arithmétique des niveaux de Gris mesurés par l'analyseur d'images sur toute la surface de la (ou des) phase(s) inconnue(s) et/ou du (ou des) étalon(s) présent(s) dans le champ visualisé.

2. Méthode selon la revendication 1 permettant d'atteindre une résolution spatiale allant jusqu'à 0,1 $\mu m^3$, caractérisée en ce que la tension d'accélération du microscope à balayage est inférieure à 10 kV et de préférence 5 kV.

**FIG.1**

$G = 66,9 \, Z - 734,6$

teinte de gris

numéro atomique

Z

Si

Al

Mg
Al2LiMg

240 — 220 — 200 — 180 — 160 — 140 — 120 — 100 — 80 — 60 — 40 — 20 — 0

11,0   12,0   13,0   14,0   15,0

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 124 759 (UNISEARCH LTD)<br>--- | | G 01 N 23/203 |
| A,D | JOURNAL OF MICROSCOPY, vol. 124, partie 1, octobre 1981, pages 57-68, the Royal Microscopical Society; M.D. BALL et al.: "The measurement of atomic number and composition in an SEM using backscattered detectors"<br>----- | | |

DOMAINES TECHNIQUES RECHERCHES (Int. Cl.4)

G 01 N
H 01 J

Le présent rapport a été établi pour toutes les revendications

| Lieu de la recherche | Date d'achèvement de la recherche | Examinateur |
|---|---|---|
| LA HAYE | 25-07-1988 | VAN DEN BULCKE E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P0402)